# EUROPÄISCHE PATENTSCHRIFT

(11) **EP 1 772 047 B1**
(45) Veröffentlichungstag und Bekanntmachung des Hinweises auf die Patenterteilung: **25.03.2009**
(21) Anmeldenummer: 06020500.2
(22) Anmeldetag: 29.09.2006
(51) Int. Cl.: A01B 69/00, B62D 13/00

(54) **An eine Zugmaschine über eine Zugdeichsel ankuppelbare landwirtschaftliche Verteilmaschine**
Agricultural distributing machine attachable with a drawbar to a tractor
Machine agricole de distribution accrochable avec un timon à un tracteur

(30) Priorität: 05.10.2005 DE 102005047572
(43) Veröffentlichungstag der Anmeldung: 11.04.2007
(73) Patentinhaber: Amazonen-Werke H. Dreyer GmbH & Co. KG, 49205 Hasbergen (DE)
(72) Erfinder: Marquering, Johannes, Dr., 49176 Borgloh (DE); Oberheide, Friedrich, 49143 Bissendorf (DE); Kemper, Martin, 49205 Hasbergen (DE)

(56) Entgegenhaltungen:
- EP-A- 0 126 387
- EP-A- 1 336 549
- EP-A1- 0 653 343
- EP-A2- 1 081 020
- DE-A1- 10 011 734
- FR-A1- 2 859 440

## Beschreibung

Die Erfindung betrifft eine an eine Zugmaschine über eine Zugdeichsel ankuppelbare landwirtschaftliche Verteilmaschine gemäß der Oberbegriffe der Patentansprüche 1 und 2.

Durch die EP 10 81 020 B1 ist eine an eine Zugmaschine über eine Zugdeichsel ankuppelbare landwirtschaftliche Verteilmaschine mit einer Zugdeichsellenkung bekannt. Durch diese Zugdeichsellenkung ist es möglich, dass die Räder der Verteilmaschine zumindest annähernd der Spur der Hinterräder der Zugmaschine folgen. Das Problem besteht nun darin, dass die Kippsicherheit der Verteilmaschine sich verschlechtert, wenn die Zugdeichsel aus der Mittelstellung gebracht wird, damit die Räder der Verteilmaschine der Radspur der Hinterräder der Zugmaschine bei Kurven- oder Hangfahrt folgen. Bei der bekannten Maschine gemäß der EP 10 81 020 B1 wird bei Straßenfahrt, wenn die Maschine mit relativ hoher Geschwindigkeit vorwärts bewegt wird, das Gelenk der als Schwenkdeichsel ausgebildeten Zugdeichsel blockiert, so dass die Zugdeichsel sich bei Straßenfahrt in Mittelstellung befindet. Somit ist die höchstmögliche Kippsicherheit für das gezogene Fahrzeug gewährleistet. Das Blockieren des Schwenkgelenkes der Deichsel für die Straßenfahrt muss von Hand durch den Fahrer des Zugfahrzeuges der gezogenen Maschine erfolgen. Wenn der Fahrer dieses unterlässt, kann es bei Straßenfahrten zu kritischen Situationen, bis zum Umkippen des gezogenen Fahrzeuges kommen, weil dann die Deichsel bei hoher Geschwindigkeit bei Kurvenfahrt verschwenkt wird.

Durch die EP 1 336 549 A1 ist eine weitere landwirtschaftliche Maschine bekannt, die eine kombinierte Achsschenkel- und Deichsellenkung aufweist. Mittels dieser Lenkung wird ebenfalls erreicht, dass die Räder der Verteilmaschine zumindest annähernd der Radspur der Hinterräder der Zugmaschine folgen. Auch hier kann es bei Straßenfahrten bei relativ hoher Geschwindigkeit, wenn die Gelenke der Achsschenkel und Deichsellenkung nicht blockiert sind, zu kritischen Situationen kommen.

Der Erfindung liegt die Aufgabe zugrunde, dass von der Steuerungseinrichtung beim Erkennen "Gerät ausgeschaltet", die Deichsel oder Achsschenkellenkung in Mittelstellung der Deichsel oder Räder blockiert werden.

Diese Aufgabe wird durch die kennzeichnenden Merkmale der Patentansprüche 1 und 2 gelöst. Infolge dieser Maßnahmen wird die Deichsel bzw. werden die Räder, wenn die Maschine ausgeschaltet ist bzw. transportiert wird, nur noch Richtung Mittelstellung verschwenkt und dann in der jeweiligen Mittelstellung blockiert, so dass die Kippsicherheit gewährleistet ist.

Unter "Gerät ausgeschaltet" wird verstanden, dass sich die Teile der Maschine oder die Maschine selber in Transportstellung befindet oder ausgeschaltet ist. Bei einem Gerät mit einem Verteilergestänge, beispielsweise einer Feldspritze lässt sich dieses beispielsweise dadurch erkennen, wenn das Gestänge in Transportstellung verriegelt ist und entsprechende Transportstellungssensoren dieses an die elektronische Steuereinrichtung melden. Bei einer anderen Verteilmaschine, beispielsweise einem Düngerstreuer wird "Gerät ausgeschaltet" interpretiert, dass beispielsweise sich die Zapfwelle nicht dreht und das Dosierorgan eine festgelegte Zeit kein Material dosiert. Wenn also die elektronische Steuereinrichtung erkennt, dass das Gerät ausgeschaltet ist, werden von der elektronischen Steuerungseinrichtung nur noch Signale "Deichsel in Mittelstellung bringen" bzw. "Räder in Mittelstellung bringen" und "anschließend in dieser Stellung blockieren und nicht mehr verschwenken" übermittelt.

Der Begriff "Gerät eingeschaltet" wird so interpretiert, dass sich die Maschine selber oder Teile der Maschine in Arbeitsstellung befinden. Bei einer Verteilmaschine, die ein Verteilergestänge aufweist, lassen sich diese Positionen dadurch erkennen, dass das gesamte Verteilergestänge in gleichmäßiger Weise zu der Symmetrielinie des Gerätes ausgefaltet ist. Bei einer Verteilmaschine ohne Verteilergestänge, beispielsweise einem Düngerstreuer mit Zentrifugalstreuwerk wird als "Gerät eingeschaltet" interpretiert, wenn die Zapfwelle sich dreht und das Dosierorgan Material ausbringt.

"Gerät ausgeschaltet" bedeutet also im Prinzip, dass das Gerät sich nicht in Arbeitsstellung befindet und "Gerät eingeschaltet" heißt, Gerät befindet sich in Arbeitsstellung.

Um die einzelnen Situationen in einfacher Weise von der elektronischen Steuereinrichtung erkennen zu können, ist vorgesehen, dass Sensoren zur Erfassung der Situationen "Gerät eingeschaltet" und / oder "Gerät ausgeschaltet" vorhanden sind.

Bei einer Verteilmaschine mit einem Verteilergestänge lassen sich die Situationen "Gerät eingeschaltet", d.h. das Gerät befindet sich in Arbeitsposition und "Gerät ausgeschaltet", d.h. Gerät befindet sich nicht in Arbeitsstellung durch das Merkmal des Anspruches 4 erkennen.

Bei einer Verteilmaschine, die als gezogener Düngerstreuer ausgebildet ist, und der Düngerstreuer über eine Zapfwelle und von einer Antriebswelle angetriebene Elemente aufweist, lassen sich die Stellung "Gerät eingeschaltet", d.h. Gerät befindet sich in Arbeitsposition und "Gerät ausgeschaltet", d.h. es findet kein Arbeits- oder Ausbringvorgang statt, lässt sich das Erkennen dieser Situationen dadurch lösen, dass an der von der Zapfwelle angetriebenen Welle ein Sensor zur Erfassung der Drehbewegung der Welle angeordnet ist, dass der Sensor Signale an die Mittel übermittelt, und dass bei Erkennen, dass die Welle sich nicht dreht, darauf geschlossen wird "Gerät ausgeschaltet".

Weiterhin kann auch bei einer Verteilmaschine mit einer Dosiereinrichtung die jeweilige Situation "Arbeitsstellung" oder "Transportstellung" dadurch erkannt werden, dass ein Sensor vorhanden ist, der erkennt, ob die Dosiereinrichtung ein- oder ausgeschaltet ist, und dass der Sensor entsprechende Signale an die elektronischen Mittel übermittelt.

Weitere Einzelheiten der Erfindung sind der Beispielsbeschreibung und den Zeichnungen zu entnehmen. Hierbei zeigen
- Fig. 1: eine von einer Zugmaschine gezogene landwirtschaftliche Verteilmaschine mit einer Deichsellenkung in Geradeausfahrt und in der Draufsicht und in schematischer Darstellung,
- Fig. 2: eine von einer Zugmaschine gezogene landwirtschaftliche Verteilmaschine mit einer Deichsellenkung bei Kurvenfahrt und in der Draufsicht und in schematischer Darstellung,
- Fig. 3: eine weitere von einer Zugmaschine gezogene landwirtschaftliche Verteilmaschine mit einer Achsschenkellenkung in Geradeausfahrt und in der Draufsicht und in schematischer Darstellung,
- Fig. 4: die von einer Zugmaschine gezogene landwirtschaftliche Verteilmaschine mit einer Achsschenkellenkung gemäß Fig. 3 bei Kurvenfahrt und in der Draufsicht und in schematischer Darstellung und
- Fig. 5: das Funktionsschema der Lenkungsansteuerung in schematischer Darstellung.

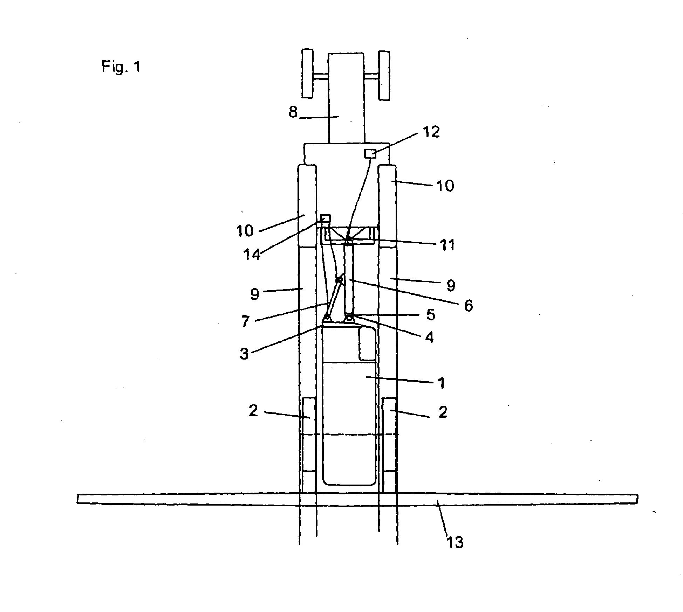

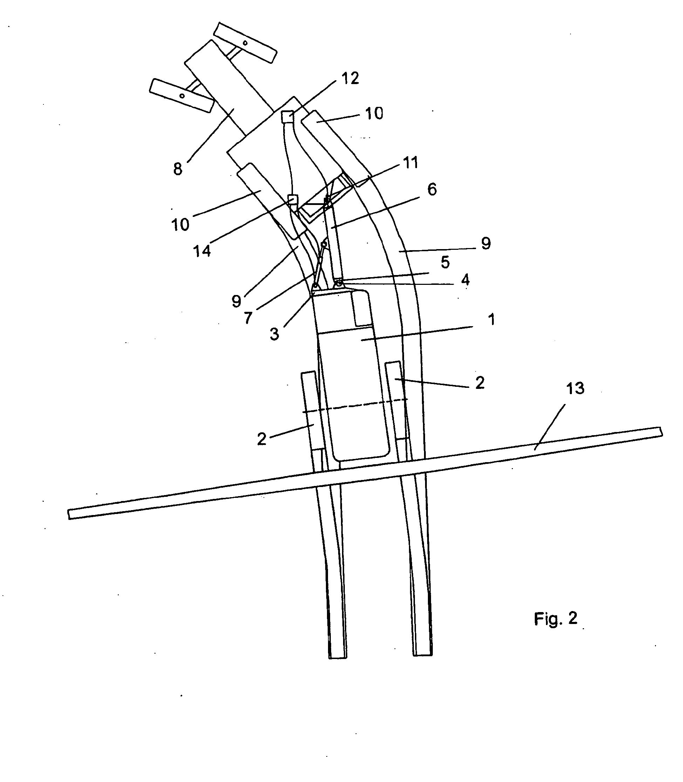

Die Verteilmaschine 1 gemäß den Fig. 1 und 2 weist ein Laufräder 2 und Rahmen 3 aufweisendes Fahrgestell auf. An dem Rahmen 3 des Fahrgestelles ist mittels eines eine aufrechte Achse 4 aufweisenden Gelenkes 5 eine Zugdeichsel 6 verschwenkbar am Rahmen 3 angeordnet. Zwischen dem Rahmen 3 und der Deichsel 6 ist ein als doppeltwirkender Hydraulikzylinder 7 ausgebildetes Stellelement zum Verschwenken der Deichsel 6 um die aufrechte Achse 4 angeordnet. Die Zugdeichsel 6 ist mit ihrer Vorderseite an eine Anhängevorrichtung des Ackerschleppers 8 angeordnet. Bei Geradeausfahrt in der Ebene folgen die Laufräder 2 der Feldspritze 1 der Radspur 9 der Hinterräder 10 der Zugmaschine 8. Am Hang oder bei Kurvenfahrt am Feldende muss die Zugdeichsel 6 gegenüber dem Rahmen 3 der Verteilmaschine 1 aus der Mittelstellung verschwenkt werden, damit die Laufräder 2 der Verteilmaschine 1 der Radspur 9 der Hinterräder 10 der Zugmaschine 8 folgen können. Hierzu ist zwischen der Deichsel 6 und dem Ackerschlepper 8 eine Winkelmessvorrichtung 11 angeordnet, so dass über diese Messvorrichtung 11, die mit einer als Bordcomputer 12 ausgebildeten elektronischen Steuereinrichtung verbunden ist, das als doppeltwirkender Hydraulikzylinder 7 ausgebildete Stellelement derart zum Verschwenken der Deichsel 6 angesteuert wird, dass die Räder 2 der Verteilmaschine 1 zumindest annähernd der Radspur 9 der Hinterräder 10 der Zugmaschine 8 folgen.

Wenn die Verteilmaschine 1 nicht eingeschaltet ist, d.h. die Verteilmaschine 1 befindet sich auf einer Transportfahrt, wird sie im allgemeinen mit einer relativ hohen Geschwindigkeit transportiert. Wenn die Deichsel 6 sich dann nicht in der Mittelstellung, wie in Fig. 1 dargestellt ist befindet, sondern zur Kurvenfahrt, wie in Fig. 2 dargestellt ist verschwenkt ist, ist die Kippsicherheit der angehängten Verteilmaschine 1 ab einer bestimmten Fahrgeschwindigkeit nicht mehr gegeben. Um dieses zu vermeiden, sind Mittel zum Erkennen "Gerät eingeschaltet" und "Gerät ausgeschaltet" vorhanden, um automatisch die jeweilige Situation zu erkennen und um zu verhindern, dass die Verteilmaschine 1 bei Transportfahrt in eine kritische Situation gerät, wird die Deichsel 6 in Mittelstellung gebracht und dort blockiert, und dass beim Arbeitseinsatz die Verteilmaschine 1 spurgetreu gesteuert werden kann, damit die Laufräder 2 der Radspur 9 der Hinterräder 10 der Zugmaschine 8 folgen können. Hierbei wird nach dem Prinzip verfahren, dass bei Erkennen durch die vorgesehenen elektronischen Mittel 12 "Gerät ausgeschaltet" von der elektronischen Steuerungseinrichtung 12 nur noch Signale "Deichsel in Mittelstellung" an die Stellelemente 7 übermittelt werden.

Hierbei werden z.B. bei einer Feldspritze 1 die Situationen, die in den das Verteilergestänge nicht im vollen Umfange ausgeklappt oder nicht symmetrisch ausgeklappt ist, als "Gerät ausgeschaltet", d.h. Deichsel 6 "in Mittelstellung bringen" interpretiert. Hierzu sind entsprechende Sensoren an dem Verteilergestänge 13 der Verteilmaschine 1 angebracht, die entsprechende Signale an den Bordcomputer 12 übermitteln. Weiterhin können bei einer Feldspritze 1, die ein zusammenfaltbares Verteilergestänge 13 aufweist, Sensoren derart angeordnet sein, dass sie erkennen, ob das Verteilergestänge 13 sich in Transportstellung oder in ausgefalteter Arbeitsstellung befindet, vorhanden sind.

### Die Funktionsweise ist folgende:

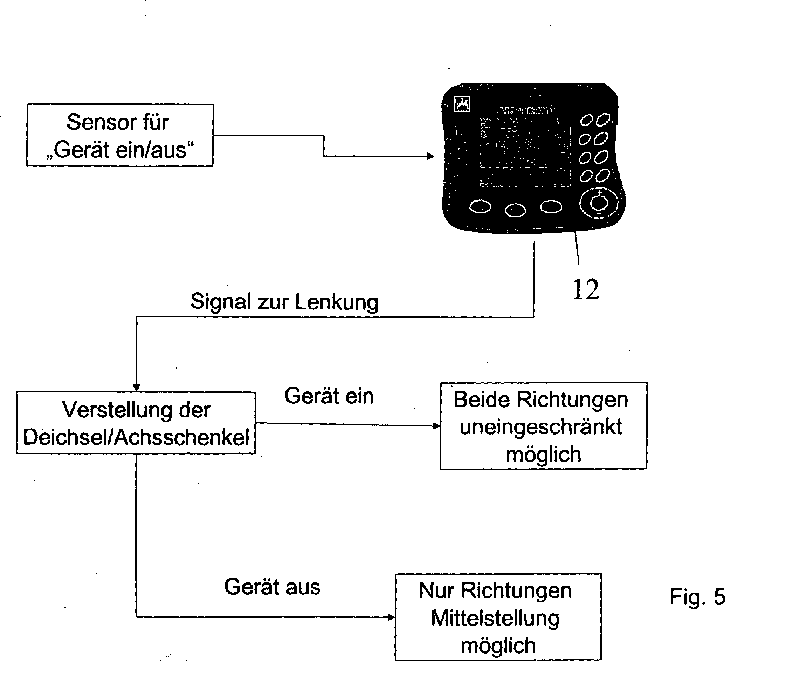

Wenn das Gerät 1 am Feldende ausgeschaltet und das Verteilergestänge 13 in Transportstellung gebracht wird, übermitteln die Sensoren an den Bordcomputer 12, "Verteilergestänge eingeklappt", d.h. "Gerät ist ausgeschaltet". Wenn der Bordcomputer also Signale übermittelt bekommt, die als "Gerät ausgeschaltet" zu interpretieren sind wird an die Stelleinrichtung 14 des Hydraulikzylinders 7 das Signal gesandt "Deichsel in Mittelstellung". Dann wird die Deichsel 6 durch den Hydraulikzylinder 7, wenn die Deichsel 6 sich in einer Situation befindet, wie in Fig. 2 dargestellt ist, in die in Fig. 1 dargestellte Mittelstellung verschwenkt und hier dann entsprechend verriegelt, wie das Diagramm in Fig. 5 zeigt.

Wenn die Verteilmaschine 1 nach dem Transport zum Feld in Arbeitsstellung gebracht worden ist, d.h. wenn das Verteilergestänge 13 ausgefaltet ist und in symmetrischer Stellung sich zur Mittelachse des Gerätes 1 sich befindet, übermitteln entsprechende Sensoren an dem Bordcomputer 12 das Signal "Gerät eingeschaltet", in diesem Falle wird über den Bordcomputer 12 die Stelleinrichtung 14 freigeschaltet, d.h. dass aufgrund der von dem Sensor 11 zwischen dem Schlepper 8 und der Deichsel 6 angeordneten Sensor 11 übermittelten Signale von dem Bordcomputer 12 am die Stelleinrichtung 14 des doppeltwirkenden Hydraulikzylinders 7, der zwischen der Deichsel 6 und dem Rahmen 3 angeordnet ist, entsprechend angesteuert wird, dass die Laufräder 2 der Verteilmaschine 1 der Radspur 9 der Hinterräder 10 der Zugmaschine 8 folgen können, wie das Diagramm in Fig. 5 zeigt.

Die Verteilmaschine 16 gemäß den Fig. 1 und 2 weist ein Laufräder 17 und Rahmen 18 aufweisendes Fahrgestell auf. An dem Rahmen 18 des Fahrgestelles ist eine Zugdeichsel 19 verschwenkbar am Rahmen 18 angeordnet. Zwischen dem Rahmen 18 und den Achsschenkel 20 der Laufräder 17 sind jeweils ein als doppeltwirkender Hydraulikzylinder 21 ausgebildete Stellelemente zum Verschwenken der Laufräder um die aufrechte Achse 22 angeordnet. Die Zugdeichsel 19 ist mit ihrer Vorderseite an eine Anhängevorrichtung des Ackerschleppers 8 angeordnet. Bei Geradeausfahrt in der Ebene folgen die Laufräder 17 der Feldspritze 16 der Radspur 9 der Hinterräder 10 der Zugmaschine 8. Am Hang oder bei Kurvenfahrt am Feldende müssen die Laufräder 17 gegenüber dem Rahmen 18 der Verteilmaschine 16 aus der Mittelstellung verschwenkt werden, damit die Laufräder 2 der Verteilmaschine 1 der Radspur 9 der Hinterräder 10 der Zugmaschine 8 folgen können. Hierzu ist zwischen der Deichsel 19 und dem Ackerschlepper 8 eine Winkelmessvorrichtung 11 angeordnet, so dass über diese Messvorrichtung 11, die mit einer als Bordcomputer 12 ausgebildeten elektronischen Steuereinrichtung verbunden ist, die als doppeltwirkenden Hydraulikzylinder 21 ausgebildete Stellelement derart zum Verschwenken der Laufräder 17 angesteuert wird, dass die Räder 17 der Verteilmaschine 16 zumindest annähernd der Radspur 9 der Hinterräder 10 der Zugmaschine 8 folgen.

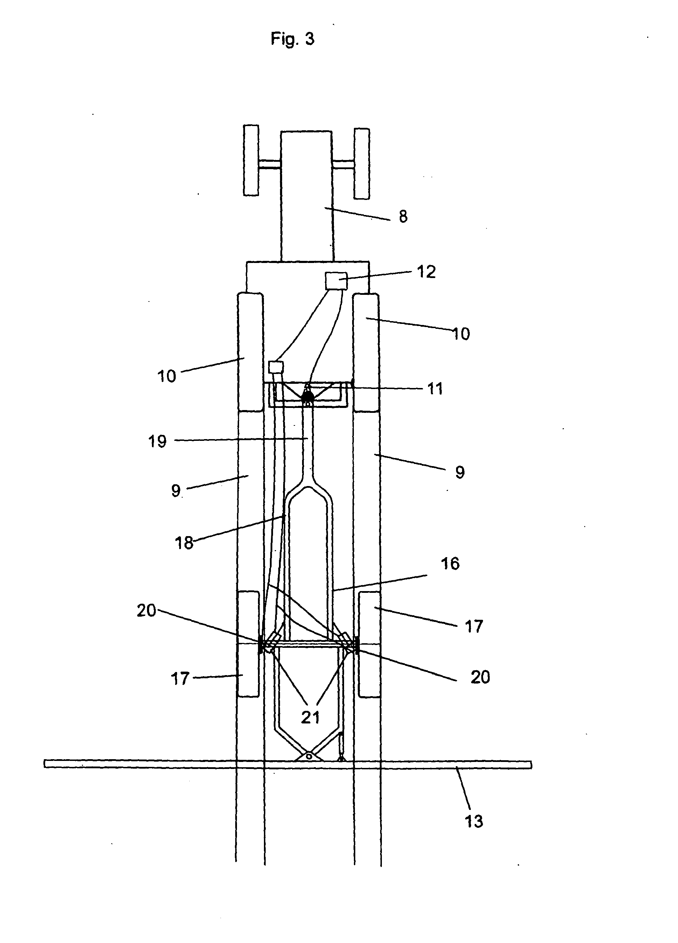

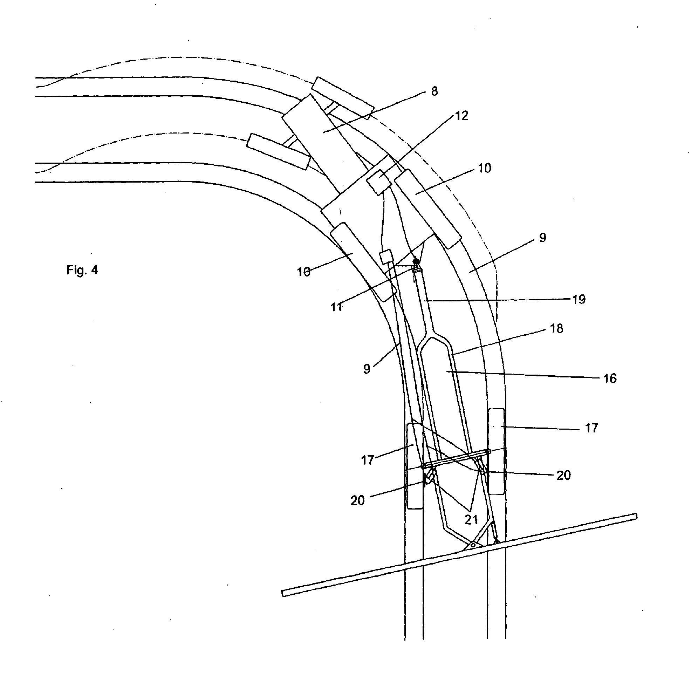

Wenn die Verteilmaschine 16 nicht eingeschaltet ist, d.h. die Verteilmaschine 16 befindet sich auf einer Transportfahrt, wird sie im allgemeinen mit einer relativ hohen Geschwindigkeit transportiert. Wenn die Laufräder 17 sich dann nicht in der Mittelstellung, wie in Fig. 3 dargestellt ist befinden, sondern zur Kurvenfahrt, wie in Fig. 4 dargestellt ist, verschwenkt ist, ist die Kippsicherheit der angehängten Verteilmaschine 16 ab einer bestimmten Fahrgeschwindigkeit nicht mehr gegeben. Um dieses zu vermeiden, sind Mittel zum Erkennen "Gerät eingeschaltet" und "Gerät ausgeschaltet" vorhanden, um automatisch die jeweilige Situation zu erkennen und um zu verhindern, dass die Verteilmaschine 1 bei Transportfahrt in eine kritische Situation gerät, werden die Laufräder 17 in Mittelstellung gebracht und dort blockiert, und dass beim Arbeitseinsatz die Verteilmaschine 16 spurgetreu gesteuert werden kann, damit die Laufräder 17 der Radspur 9 der Hinterräder 10 der Zugmaschine 8 folgen können. Hierbei wird nach dem Prinzip verfahren, dass bei Erkennen durch die vorgesehenen elektronischen Mittel 12 "Gerät ausgeschaltet" von der elektronischen Steuerungseinrichtung 12 nur noch Signale "Deichsel in Mittelstellung" an die Stellelemente 21 übermittelt werden.

Hierbei werden z.B. bei einer Feldspritze 16 die Situationen; die in den das Verteilergestänge nicht im vollen Umfange ausgeklappt oder nicht symmetrisch ausgeklappt ist, als "Gerät ausgeschaltet", d.h. Laufräder 17 "in Mittelstellung bringen" interpretiert. Hierzu sind entsprechende Sensoren an dem Verteilergestänge 13 der Verteilmaschine 16 angebracht, die entsprechende Signale an den Bordcomputer 12 übermitteln. Weiterhin können bei einer Feldspritze 1, die ein zusammenfaltbares Verteilergestänge 13 aufweist, Sensoren derart angeordnet sein, dass sie erkennen, ob das Verteilergestänge 13 sich in Transportstellung oder in ausgefalteter Arbeitsstellung befindet, vorhanden sind.

Die Funktionsweise ist folgende:

Wenn das Gerät 1 am Feldende ausgeschaltet und das Verteilergestänge 13 in Transportstellung gebracht wird, übermitteln die Sensoren an den Bordcomputer 12, "Verteilergestänge eingeklappt", d.h. "Gerät ist ausgeschaltet". Wenn der Bordcomputer also Signale übermittelt bekommt, die als "Gerät ausgeschaltet" zu interpretieren sind werden an die Stelleinrichtung 14 der Hydraulikzylinder 21 das Signal gesandt "Deichsel in Mittelstellung". Dann werden die Laufräder 17 durch den Hydraulikzylinder 21, wenn die Laufräder 17 sich in einer Situation befindet, wie in Fig. 4 dargestellt ist, in die in Fig. 3 dargestellte Mittelstellung verschwenkt und hier dann entsprechend verriegelt, wie das Diagramm in Fig. 5 zeigt.

Wenn die Verteilmaschine 16 nach dem Transport zum Feld in Arbeitsstellung gebracht worden ist, d.h. wenn das Verteilergestänge 13 ausgefaltet ist und in symmetrischer Stellung sich zur Mittelachse des Gerätes 16 sich befindet, übermitteln entsprechende Sensoren an dem Bordcomputer 12 das Signal "Gerät eingeschaltet", in diesem Falle wird über den Bordcomputer 12 die Stelleinrichtung 14 freigeschaltet, d.h. dass aufgrund der von dem Sensor 11 zwischen dem Schlepper 8 und der Deichsel 6 angeordneten Sensor 11 übermittelten Signale von dem Bordcomputer 12 am die Stelleinrichtung 14 des doppeltwirkenden Hydraulikzylinders 21, der zwischen der Laufräder 17 und dem Rahmen 18 angeordnet sind, entsprechend angesteuert wird, dass die Laufräder 17 der Verteilmaschine 1 der Radspur 9 der Hinterräder 10 der Zugmaschine 8 folgen können, wie das Diagramm in Fig. 5 zeigt.

## Patentansprüche

1. An eine Zugmaschine über eine Zugdeichsel ankuppelbare landwirtschaftliche Verteilmaschine, wie Feldspritze oder Düngerstreuer, mit einem Laufräder und Rahmen aufweisenden Fahrgestell, wobei die Zugdeichsel mittels eines eine aufrechte Achse aufweisenden Gelenkes verschwenkbar am Rahmen und zwischen der Deichsel und dem Rahmen zumindest ein Stellelement zum Verschwenken der Deichsel um die aufrechte Achse angeordnet ist, wobei Mittel vorhanden sind, um das Stellelement derart zum Verschwenken der Deichsel anzusteuern, dass die Räder der Verteilmaschine zumindest annähernd der Radspur der Hinterräder der Zugmaschine folgen, wobei die Verteilmaschine Dosier- und Verteilorgane aufweist, **dadurch gekennzeichnet, dass** Mittel (12) zum Erkennen "Gerät eingeschaltet" und "Gerät ausgeschaltet" vorhanden sind, das bei Erkennen durch die Mittel (12) "Gerät ausgeschaltet" von der Steuerungseinrichtung (12,14) der Mittel (12) nur noch Signale "Deichsel in Mittelstellung" an die Stellelemente (7,14) übermittelt werden.

2. An eine Zugmaschine über eine Zugdeichsel ankuppelbare landwirtschaftliche Verteilmaschine, wie Feldspritze oder Düngerstreuer, mit einem Laufräder und Rahmen aufweisenden Fahrgestell, wobei die Laufräder lenkbar am Rahmen und zwischen den Laufrädern und dem Rahmen zumindest ein Stellelement zum Lenken der Räder angeordnet ist, wobei Mittel vorhanden sind, um das Stellelement derart zum Lenken der Räder anzusteuern, dass die Räder der Verteilmaschine zumindest annähernd der Radspur der Hinterräder der Zugmaschine folgen, wobei die Verteilmaschine Dosier- und Verteilorgane aufweist, **dadurch gekennzeichnet, dass** Mittel (12) zum Erkennen "Gerät eingeschaltet" und "Gerät ausgeschaltet" vorhanden sind, das bei Erkennen durch die Mittel (12) "Gerät ausgeschaltet" von der Steuerungseinrichtung (12,14) der Mittel (12) nur noch Signale "Räder in Mittelstellung" an die Stellelemente übermittelt werden.

3. Gerät nach Anspruch 1 oder 2, **dadurch gekennzeichnet, dass** Sensoren zur Erfassung von "Gerät eingeschaltet" und / oder "Gerät ausgeschaltet" vorhanden sind.

4. Gerät nach einem oder mehreren der vorstehenden Ansprüche, **dadurch gekennzeichnet, dass** die Verteilmaschine (1,16) ein zusammenfaltbares Verteilergestänge (13) aufweist, das Sensoren vorhanden sind, die erkennen, ob das Verteilergestänge (13) sich in Transportstellung oder in ausgefalteter Arbeitsstellung befindet.

5. Gerät nach einem oder mehreren der vorstehenden Ansprüche, **dadurch gekennzeichnet**, wobei die Verteilmaschine als gezogener Düngerstreuer ausgebildet ist, dass der Düngerstreuer über von einer Zapfwelle und eine Antriebswelle angetriebene Elemente aufweist, **dadurch gekennzeichnet, dass** an der von der Zapfwelle angetriebenen Welle ein Sensor zur Erfassung der Drehbewegung der Welle angeordnet ist, dass der Sensor Signale an die Mittel (12) übermittelt, und dass bei Erkennen, das die Welle sich nicht dreht, darauf geschlossen wird "Gerät ausgeschaltet".

6. Gerät nach Anspruch 5, **dadurch gekennzeichnet, dass** ein Sensor vorhanden ist, der erkennt ob die Dosiereinrichtung ein- oder ausgeschaltet ist und dass der Sensor entsprechende Signale an die Mittel (12) übermittelt.

## Claims

1. Agricultural distributor, such as a spraying machine or fertiliser spreader, that is couplable to a tractor by means of a towing shaft, said distributor having a chassis that includes running wheels and frame, wherein the towing shaft is positioned so as to be pivotable on the frame by means of a pivot joint that has an upright axis and at least one adjusting element for pivoting the towing shaft about the upright axis is positioned between the towing shaft and the frame, wherein means are provided to activate the adjusting element in such a manner for pivoting the shaft that the wheels of the distributor follow the wheel track of the rear wheels of the tractor in an at least approximate manner, wherein the distributor includes metering and distributing members, **characterized in that** means (12) are provided to recognize "device on" and "device off", that where "device off' is recognized by the means (12), only signals "towing shaft in centre position" are still transmitted to the adjusting elements (7, 14) by the control device (12, 14) of the means (12).

2. Agricultural distributor, such as a spraying machine or fertiliser spreader, that is couplable to a tractor by means of a towing shaft, said distributor having a chassis that includes running wheels and frame, wherein the running wheels are positioned at the frame so as to be steerable and at least one adjusting element for steering the wheels is positioned between the running wheels and the frame, wherein means are provided to activate the adjusting element in such a manner for steering the wheels that the wheels of the distributor follow the wheel track of the rear wheels of the tractor in an at least approximate manner, wherein the distributor includes metering and distributing members, **characterized in that** means (12) are provided to recognize "device on" and "device off", that where "device off' is recognized by the means (12), only signals "towing shaft in centre position" are still transmitted to the adjusting elements by the control device (12, 14) of the means (12).

3. Device according to Claim 1 or 2, **characterized in that** sensors are provided for detecting "device on" and/or "device off".

4. Device according to one or more of the preceding claims, **characterized in that** the distributor (1, 16) has a distributor boom that can be folded up, that sensors are provided which recognize whether the distributor boom (13) is in the transport position or in the folded-out operating position.

5. Device according to one or more of the preceding claims, **characterized** wherein the distributor is in the form of a towed fertilizer spreader, that the fertilizer spreader has elements that are driven by a power take-off shaft and a drive shaft, **characterized in that** a sensor for detecting the rotational movement of the shaft is positioned at the shaft that is driven by the power take-off shaft, that the sensor transmits signals to the means (12), and that where it is recognized that the shaft is not rotating, "device off" is indicated.

6. Device according to Claim 5, **characterized in that** a sensor is provided that recognizes whether the metering device is on or off and **in that** the sensor transmits corresponding signals to the means (12).

## Revendications

1. Machine agricole de distribution attelée par un timon à un tracteur tel qu'un pulvérisateur ou un distributeur d'engrais et comprenant :
- un châssis avec un cadre et des roues, le timon étant articulé au cadre par une articulation d'axe vertical et entre le timon et le cadre,
- au moins un élément de réglage pour basculer le timon autour de l'axe vertical, des moyens permettant à l'élément de réglage de basculer le timon afin que les roues du distributeur suivent au moins approximativement la trace des roues arrière du tracteur,
- des organes de dosage et de distribution,
**caractérisée par**
des moyens (12) pour reconnaître « appareil enclenché » et « appareil désenclenché » et lorsque les moyens (12) détectent « appareil désenclenché », le dispositif de commande (12, 14), ne transmet au moyen (12) que le signal « timon en position médiane » aux éléments de réglage (7, 14).

2. Machine agricole de distribution attelée par un timon à un tracteur tel qu'un pulvérisateur ou un distributeur d'engrais comprenant :
- un châssis avec un cadre et des roues,
dans lequel les roues du cadre sont directrices et au moins un élément de réglage est disposé entre les roues et le cadre, pour guider les roues,
- des moyens pour commander l'élément de réglage qui oriente les roues de sorte que les roues du distributeur suivent au moins approximativement la trace des roues arrière du tracteur,
**caractérisée par**
des moyens (12) pour reconnaître « appareil enclenché » et « appareil désenclenché » et lorsque les moyens (12) détectent « appareil désenclenché », le dispositif de commande (12, 14), ne transmet au moyen (12) que le signal « timon en position médiane » aux éléments de réglage (7, 14).

3. Machine agricole selon la revendication 1 ou 2,
**caractérisé par**
des capteurs pour détecter « appareil enclenché » et/ou « appareil désenclenché».

4. Machine agricole selon l'une ou plusieurs des revendications précédentes,
**caractérisé en ce que**
le distributeur (1, 16) présente une flèche de distribution (13) repliable, et des capteurs détectent si la flèche de distribution (13) se trouve en position de transport ou en position de travail déployée.

5. Machine agricole selon l'une ou plusieurs des revendications précédentes,
**caractérisé en ce que**
le distributeur est un épandeur tracté, ayant des éléments entraînés par un arbre et une prise de force,
l'arbre entraîné par la prise de force comporte un capteur pour la détection de son mouvement de rotation,
- des signaux de capteur sont transmis au moyen (12) et,
- lors de la détection de l'arrêt de la rotation de l'arbre, on conclut « appareil désenclenché ».

6. Machine agricole selon la revendication 5,
**caractérisé par**
un capteur qui détecte si le dispositif de dosage est enclenché ou désenclenché, le capteur transmettant des signaux correspondants au moyen (12).
